(19) Europäisches Patentamt European Patent Office Office européen des brevets

(11) **EP 4 730 441 A1**

(12) **EUROPEAN PATENT APPLICATION**
published in accordance with Art. 153(4) EPC

(43) Date of publication:
**22.04.2026 Bulletin 2026/17**

(21) Application number: **24913823.1**

(22) Date of filing: **18.12.2024**

(51) International Patent Classification (IPC):
*H01M 4/62* (2006.01)          *H01M 4/13* (2010.01)
*H01M 10/052* (2010.01)          *H01M 4/02* (2006.01)

(52) Cooperative Patent Classification (CPC):
**H01M 4/02; H01M 4/13; H01M 4/62; H01M 10/052**

(86) International application number:
**PCT/KR2024/097145**

(87) International publication number:
**WO 2025/144019 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 KR 20230193706**

(71) Applicant: **LG Energy Solution, Ltd.**
**Seoul 07335 (KR)**

(72) Inventors:
• **HONG, Jee Hoon**
  **Daejeon 34122 (KR)**
• **LEE, Yun Ju**
  **Daejeon 34122 (KR)**
• **JANG, Seong Keun**
  **Daejeon 34122 (KR)**
• **LEE, Chang Woo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POSITIVE ELECTRODE AND SECONDARY BATTERY INCLUDING SAME**

(57)    The present invention relates to a positive electrode including a positive electrode current collector, a first positive electrode active material layer formed on an upper surface of the positive electrode current collector, and a second positive electrode active material layer formed on a lower surface of the positive electrode current collector, in which each of the first positive electrode active material layer and the second positive electrode active material layer includes a first conductive material and a second conductive material, an average length of the second conductive material is longer than an average length of the first conductive material, and K indicated by [Expression 1] is 0.82 to 1.16. A specific description of Expression 1 above is as described in the present specification.

[FIG. 2]

100

**Description**

<u>**TECHNICAL FIELD**</u>

<u>**Cross-reference to Related Applications**</u>

This application claims the benefit of Korean Patent Application No. 10-2023-0193706, filed on December 27, 2023, in the Korean Intellectual Property Office, the disclosure of which is incorporated in the present specification in its entirety by reference.

<u>**Technical Field**</u>

The present invention relates to a positive electrode and a secondary battery including the same and more specifically relates to a positive electrode having improved cycle characteristics and a high-capacity secondary battery including the positive electrode.

<u>**BACKGROUND ART**</u>

With the advancement of technology in electric vehicles and portable devices, and the like, the demand for a secondary battery as an energy source is rapidly increasing. In particular, as a range of application of secondary batteries expands to electric vehicles (EVs) and hybrid electric vehicles (HEVs), the demand for high-capacity secondary batteries having an excellent capacity retention rate is increasing.

The above-described capacity retention rate may be determined by the constitutional elements of the secondary battery. Specifically, a secondary battery includes a battery case and an electrode assembly that is accommodated in the battery case, and the electrode assembly may have a structure that is obtained by winding a positive electrode having a positive electrode active material layer formed on both sides of a positive electrode current collector, a negative electrode having a negative electrode active material layer formed on both sides of a negative electrode current collector, and a separator disposed between the positive electrode and the negative electrode. In this case, when the positive electrode is wound, the physical properties of the positive electrode active material layer formed on both sides of the positive electrode current collector may change, which may cause uneven charging and discharging, thereby causing a decrease in capacity retention rate of the secondary battery.

As a result, research is needed on a technology that makes it possible to improve the capacity retention rate of a jelly roll-type electrode assembly.

<u>**DISCLOSURE OF THE INVENTION**</u>

<u>**TECHNICAL PROBLEM**</u>

In order to solve the above-described problems, an object of the present invention is to provide a positive electrode having improved cycle characteristics and improved capacity by reducing a difference in conductivity between a first positive electrode active material layer and a second positive electrode active material layer, where the difference is caused by the winding of the positive electrode by applying, to the positive electrode, a first positive electrode active material layer and a second positive electrode active material layer which have compositions different from each other, and to provide a secondary battery including the positive electrode.

<u>**TECHNICAL SOLUTION**</u>

[1] The present invention provides a positive electrode including a positive electrode current collector, a first positive electrode active material layer formed on an upper surface of the positive electrode current collector, and a second positive electrode active material layer formed on a lower surface of the positive electrode current collector, in which each of the first positive electrode active material layer and the second positive electrode active material layer includes a first conductive material and a second conductive material, an average length of the second conductive material is longer than an average length of the first conductive material, and K indicated by the following [Expression 1] is 0.82 to 1.16.

[Expression 1]

$$K = \frac{(w_{T1} \times BET_1 \times L_1 \times \eta_1) + (w_{T2} \times BET_2 \times L_2 \times \eta_2)}{(w_{B1} \times BET_1 \times L_1 \times \eta_1) + (w_{B2} \times BET_2 \times L_2 \times \eta_2)} \times \frac{P_B}{P_T} \times 0.85$$

In Expression 1, $W_{T1}$ indicates a content (% by weight) of the first conductive material contained in the first positive electrode active material layer, $W_{T2}$ indicates a content (% by weight) of the second conductive material contained in the first positive electrode active material layer, $W_{B1}$ indicates a content (% by weight) of the first conductive material contained in the second positive electrode active material layer, $W_{B2}$ indicates a content (% by weight) of the second conductive material contained in the second positive electrode active material layer, $BET_1$ indicates a specific surface area ($m^2/g$) of the first conductive material, $BET_2$ indicates a specific surface area ($m^2/g$) of the second conductive material, $L_1$ indicates an average length ($\mu m$) of the first conductive material, $L_2$ indicates an average length ($\mu m$) of the second conductive material, $\eta_1$ indicates a true density (g/cc) of the first conductive material, $\eta_2$ indicates a true density (g/cc) of the second conductive material, $P_T$ indicates a porosity (%) of the first positive electrode active material layer, and $P_B$ indicates a porosity (%) of the second positive electrode active material layer.

[2] The present invention may provide the positive electrode according to [1], in which the average length ($L_2$) of the second conductive material is 2 times to 6 times the average length ($L_1$) of the first conductive material.

[3] The present invention may provide the positive electrode according to [1] and/or [2], in which the average length ($L_2$) of the second conductive material is 4 $\mu m$ to 8 $\mu m$.

[4] The present invention may provide the positive electrode according to at least one of [1] to [3], in which the content ($W_{T2}$) of the second conductive material in the first positive electrode active material layer is larger than the content ($W_{B2}$) of the second conductive material in the second positive electrode active material layer.

[5] The present invention may provide the positive electrode according to at least one of [1] to [4], in which a weight ratio ($W_{T1}:W_{T2}$) of the first conductive material to the second conductive material contained in the first positive electrode active material layer is 15:1 to 45:1.

[6] The present invention may provide the positive electrode according to at least one of [1] to [5], in which a weight ratio of the first conductive material to the second conductive material contained in the second positive electrode active material layer ($W_{B1}:W_{B2}$) is 35:1 to 45:1.

[7] The present invention may provide the positive electrode according to at least one of [1] to [6], in which the content ($W_{T2}$) of the second conductive material in the first positive electrode active material layer is 0.015% by weight to 0.025% by weight with respect to a total weight of the first positive electrode active material layer.

[8] The present invention may provide the positive electrode according to at least one of [1] to [7], in which the specific surface area ($BET_1$) of the first conductive material may be 0.15 times to 0.5 times the specific surface area ($BET_2$) of the second conductive material. Desirably, the present invention may provide a positive electrode in which the specific surface area ($BET_1$) of the first conductive material may be 200 $m^2/g$ to 420 $m^2/g$, and the specific surface area ($BET_2$) of the second conductive material may be 850 $m^2/g$ to 1,250 $m^2/g$.

[9] The present invention may provide the positive electrode according to at least one of [1] to [8], in which the first conductive material is a multi-walled carbon nanotube, and the second conductive material is a single-walled carbon nanotube or a double-walled carbon nanotube.

[10] The present invention may provide the positive electrode according to at least one of [1] to [9], in which the true density ($\eta_1$) of the first conductive material is 1.97 g/cc to 2.07 g/cc.

[11] The present invention may provide the positive electrode according to at least one of [1] to [10], in which the true density ($\eta_2$) of the second conductive material is 1.85 g/cc to 1.95 g/cc.

[12] The present invention may provide a secondary battery including an electrode assembly in which the positive electrode according to at least one of [1] to [10], a negative electrode, and a separator disposed between the positive electrode and the negative electrode are wound in one direction, and a battery case in which the electrode assembly is accommodated, in which in a case where the positive electrode is wound, the first positive electrode active material layer is arranged to face the battery case, and the second positive electrode active material layer is arranged to face a winding center.

[13] The present invention may provide the secondary battery according to [12], in which the secondary battery is a cylindrical secondary battery having a form factor ratio of 0.4 or more.

[14] The present invention may provide the secondary battery according to [12] and/or [13], in which the secondary battery is a 46110 cell, a 4875 cell, a 48112 cell, a 4880 cell, or a 4680 cell.

[15] The present invention may provide the secondary battery according to at least one of [1] to [14], in which in a case where one cycle of charging and discharging is defined as charging until reaching 4.2 V at a constant current of 0.5 C in a temperature range of 20°C to 55°C and then discharging until reaching 2.5 V at a constant current of 0.5 C, the secondary battery has 80% of a capacity retention rate according to the following [Expression 2].

Capacity retention rate (%) = 100 * {discharge capacity after 200 cycles}/{discharge capacity after 1 cycle}.

[Expression 2]

## ADVANTAGEOUS EFFECTS

A positive electrode according to one exemplary embodiment of the present invention and a secondary battery including the positive electrode reduce changes in physical properties between the first and second positive electrode active material layers caused by the winding of the positive electrode by applying the first and second positive electrode active material layers in which the content ratios of the first and second conductive materials are different from each other, thereby making it possible to improve the cycle characteristics of the secondary battery. In addition, by applying the above-described positive electrode to a high-capacity secondary battery, it is possible to realize a secondary battery having an improved capacity and an improved capacity retention rate.

The effects that can be obtained from the exemplary embodiments according to the present invention are not limited to the effects mentioned above, and from the following description, other effects that are not mentioned can be clearly derived and understood by a person having ordinary skill in the technical field to which the exemplary embodiments according to the present disclosure belong. That is, unintended effects which result from implementing the exemplary embodiments of the present disclosure can also be derived from the exemplary embodiments according to the present disclosure by a person having ordinary skill in the relevant technical field.

## BRIEF DESCRIPTION OF THE DRAWINGS

FIG. 1 is a perspective view illustrating a positive electrode according to embodiments; and
FIG. 2 is a perspective view illustrating a secondary battery according to embodiments.

## MODE FOR CARRYING OUT THE INVENTION

The terms and words, which are used in the present specification and claims, are not to be restrictively construed in their ordinary or dictionary sense and are to be construed in the sense and with the concepts consistent with the technical ideas of the present invention based on the principle that an inventor may properly define concepts of terms to describe the present invention of the inventor in the best way.

In the present specification, a term such as "including/containing", "equipped", or "having" is intended to designate the presence of implemented features, numbers, steps, constitutional elements, or a combination thereof, and thus it should be understood that this does not exclude in advance the presence of one or more other features, numbers, steps, constitutional element, or a combination thereof or addition possibilities.

Each of the phrases such as "A or B", "at least one of A and B", "at least one of A or B", "A, B, or C", "at least one of A, B, and C", and "at least one of A, B, or C" can include any one of the items listed together in the corresponding phrase among the above-described phrases, or all possible combinations of them.

Terms such as "first" or "second" for a constitutional element may be used simply to distinguish one constitutional element from another constitutional element, and the constitutional elements are not limited in the different aspect (for example, importance or order).

The "specific surface area" is measured by the BET method, and specifically, it can be calculated from the nitrogen gas adsorption amount at liquid nitrogen temperature (77K) using BELSORP-mino II from BEL Japan Inc.

The "average length" of each of the first conductive material and the second conductive material can be measured using a field emission type scanning electron microscope. For example, the average length of the first conductive material is measured according to such a method as follows. A solution obtained by adding the first conductive material and carboxymethyl cellulose in water at a weight ratio of 40:60 (the solid content is 1% by weight based on the total weight of the solution) is diluted 1,000 times in water. Thereafter, 20 ml of the diluted solution is filtered through a filter, and the filter through which the first conductive material has been filtered is dried. One hundred images of the above-described dried filter are captured using a scanning electron microscope (SEM), and the length of the first conductive material is measured using the imageJ program. Then, the average value of the length can be defined as the average length of the first conductive material.

Hereinafter, the present invention will be described in detail.

The positive electrode and/or the secondary battery according to the present invention includes at least one of the configurations disclosed below and may include any combination between technically possible configurations among the configurations below.

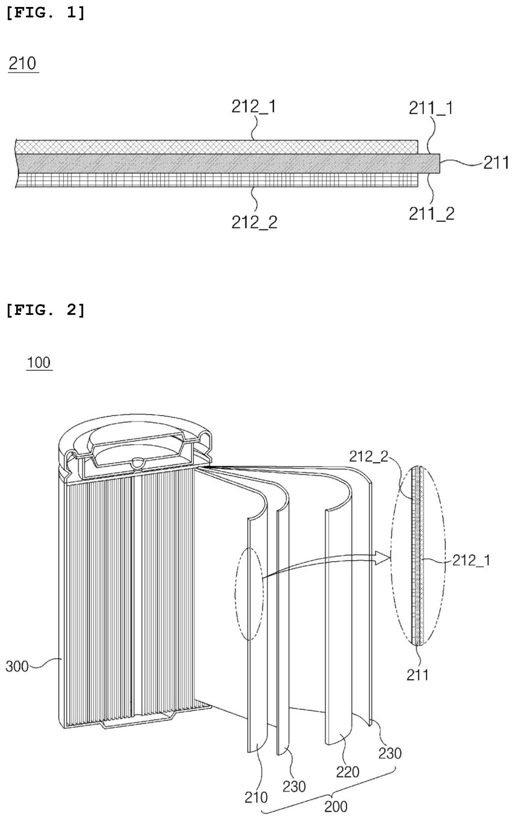

FIG. 1 is a perspective view illustrating a positive electrode (210) according to embodiments.

FIG. 2 is a perspective view illustrating a secondary battery (100) according to embodiments.

With reference to FIG. 1 and FIG. 2, the positive electrode (210) according to the present invention includes a positive electrode current collector (211), a first positive electrode active material layer (212_1) formed on an upper surface (211_1) of the positive electrode current collector, and a second positive electrode active material layer (212_2) formed on a lower surface (211_2) of the positive electrode current collector, and each of the first positive electrode active material layer (212_1) and the second positive electrode active material layer (212_2) includes a first conductive material (not illustrated) and a second conductive material (not illustrated), where the average length of the second conductive material is longer than the average length of the first conductive material.

In addition, the secondary battery (100) according to the present invention includes an electrode assembly (200) in which the positive electrode (210), a negative electrode (220), and a separator (230) disposed between the positive electrode (210) and the negative electrode (220) are wound in one direction; and a battery case (300)) in which the electrode assembly (200) is accommodated. In a case where the electrode assembly (200) is wound, the first positive electrode active material layer (212_1) is arranged to face the battery case (300), and the second positive electrode active material layer (212_2) is arranged to face a winding center.

The first positive electrode active material layer (212_1) arranged on the side of the battery case (300) has a larger radius of curvature than the second positive electrode active material layer (212_2) arranged on the side of the winding center, and as a result, the distance between the positive electrode active material particles contained in each of the first positive electrode active material layer (211_1) and the second positive electrode active material layer (211_2) and the distance between the positive electrode active material and the conductive material may vary. For example, in a case where an electrode assembly is manufactured by winding a positive electrode, on which a first positive electrode active material layer and a second positive electrode active material layer which have the same composition are formed, the first positive electrode active material layer has a larger radius of curvature than the second positive electrode active material layer. As a result, the distance between the active material particles in the first positive electrode active material layer is larger than the distance between the active material particles in the second positive electrode active material layer, and the conductivity of the first positive electrode active material layer is smaller than the conductivity of the second positive electrode active material layer, which results in a difference in conductivity between the first and second positive electrode active material layers. This may result in such a problem that the output characteristics and cycle characteristics of the secondary battery deteriorate.

As a result, in order to solve the above-described problems, the present invention aims to provide a secondary battery (100) having improved cycle characteristics obtained by preventing a decrease in the conductivity of the first positive electrode active material layer (212_1) which is caused by a difference in the radius of curvature, by applying, to the positive electrode (210), the first positive electrode active material layer (212_1) and the second positive electrode active material layer (212_2) in which the content ratios of the first and second conductive materials are different from each other.

Hereinafter, the present invention will be described in detail.

<Positive electrode>

The positive electrode (210) according to the present invention includes the positive electrode current collector (211) as well as the first positive electrode active material layer (212_1) and the second positive electrode active material layer (212_2), which are respectively formed on both sides of the positive electrode current collector (211). Specifically, the positive electrode (210) includes the positive electrode current collector (211), the first positive electrode active material layer (212_1) formed on the upper surface (211_1) of the positive electrode current collector, and the second positive electrode active material layer (212_2) formed on the lower surface (211_2) of the positive electrode current collector.

Each of the first positive electrode active material layer (212_1) and the second positive electrode active material layer (212_2) of the positive electrode (210) according to the present invention may include two kinds of conductive materials having physical properties different from each other. In a case where two kinds of conductive materials are mixed and used, the mixing ratio of the conductive materials is adjusted to complement the disadvantages and exhibit the advantages of the respective conductive materials, which makes it possible to improve the performance of the positive electrode. In addition, the performance of the positive electrode can be more finely tuned by controlling the mixing ratio between the two kinds of conductive materials.

Each of the first positive electrode active material layer (212_1) and the second positive electrode active material layer (212_2) includes a first conductive material (not shown in the drawing) and a second conductive material (not shown in the drawing), and the compositions of the first positive electrode active material layer (212_1) and the second positive electrode active material layer (212_2) are different from each other. Specifically, the contents of the first and second conductive materials in the first positive electrode active material layer (212_1) and the second positive electrode active material layer (212_2) may be different from each other.

In this case, the positive electrode according to the present invention may have K of 0.82 to 1.16, where K is expressed by the following [Expression 1].

[Expression 1]

$$K = \frac{(w_{T1} \times BET_1 \times L_1 \times \eta_1) + (w_{T2} \times BET_2 \times L_2 \times \eta_2)}{(w_{B1} \times BET_1 \times L_1 \times \eta_1) + (w_{B2} \times BET_2 \times L_2 \times \eta_2)} \times \frac{P_B}{P_T} \times 0.85$$

In the above-described Expression 1, $W_{T1}$ indicates a content (% by weight) of the first conductive material contained in the first positive electrode active material layer (212_1), $W_{T2}$ indicates a content (% by weight) of the second conductive material contained in the first positive electrode active material layer (212_1), $W_{B1}$ indicates a content (% by weight) of the first conductive material contained in the second positive electrode active material layer (212_2), $W_{B2}$ indicates a content (% by weight) of the second conductive material contained in the second positive electrode active material layer (212_2), $BET_1$ indicates a specific surface area (m$^2$/g) of the first conductive material, $BET_2$ indicates a specific surface area (m$^2$/g) of the second conductive material, $L_1$ indicates an average length ($\mu$m) of the first conductive material, $L_2$ indicates an average length ($\mu$m) of the second conductive material, $\eta_1$ indicates a true density (g/cc) of the first conductive material, $\eta_2$ indicates a true density (g/cc) of the second conductive material, $P_T$ indicates a porosity (%) of the first positive electrode active material layer (212_1), and $P_B$ indicates a porosity (%) of the second positive electrode active material layer (212_2).

The above-described [Expression 1] reflects the porosity of each of the first and second positive electrode active material layers (212_1 and 212_2), which can serve as an indicator of the difference in the conductive path depending on the physical properties of the first and second conductive materials and the radius of curvature, which are major factors affecting the conductivity. Specifically, the above-described K is characterized by using, as factors, the content, specific surface area, average length, and true density of each of the first and second conductive materials contained in each of the first and second positive electrode active material layers (212_1 and 212_2) and the porosity of each of the first and second positive electrode active material layers. The conductivity of each of the first and second positive electrode active material layers (212_1 and 212_2) may vary depending on the content, specific surface area, average length, and true density of each of the first and second conductive materials. In addition, since the conductivity of each of the first and second positive electrode active material layers (212_1 and 212_2) may increase as the porosity thereof decreases, the porosity may also affect the conductivity of each of the first and second positive electrode active material layers (212_1 and 212_2).

The above-described K can serve as an indicator of the degree of identity of conductivity between the first and second positive electrode active material layers (212_1 and 212_2). The above-described K may be 0.82 to 1.16, may be preferably 0.85 to 1.15, and may be more preferably 0.9 to 1.1. Specifically, the above-described K may be 0.82 or more, 0.85 or more, 0.88 or more, 0.90 or more, or 0.92 or more, and the above-described K may be 1.16 or less, 1.15 or less, 1.1 or less, 1.08 or less, or 1.05 or less.

It is meant that the closer the above-described K is to 1, the smaller the difference in the conductivity between the first positive electrode active material layer (212_1) and the second positive electrode active material layer (212_2). The conductivity of the first positive electrode active material layer (212_1) and the conductivity of the second positive electrode active material layer (212_2) need to be similar to each other so that charging and discharging are allowed to proceed uniformly, which makes it possible to realize the secondary battery (100) having excellent cycle characteristics. On the other hand, as the value of the above-described K is far away from 1, the difference in the conductivity between the first positive electrode active material layer (212_1) and the second positive electrode active material layer (212_2) increases, which may cause a problem that charging and discharging proceed unevenly, for example, such a problem that a portion having low resistance is overcharged due to the difference in conductivity

The above-described K uses, as factors, the average length ($L_1$) of the first conductive material and the average length ($L_2$) of the second conductive material, which are respectively contained in the first and second positive electrode active material layers (212_1 and 212_2). The average length ($L_2$) of the second conductive material is longer than the average length ($L_1$) of the first conductive material, which makes it easy to form a conductive path between the positive electrode active materials, thereby capable of improving conductivity.

Specifically, the average length ($L_2$) of the second conductive material may be 2 times to 6 times and preferably 3 times to 5 times the average length ($L_1$) of the first conductive material. In addition, the average length ($L_1$) of the first conductive material may be 0.5 $\mu$m to 3.5 $\mu$m, and the average length ($L_2$) of the second conductive material may be 4 $\mu$m to 8 $\mu$m. The length of each of the first and second conductive materials needs to satisfy the above-described range so that the conductivity of each of the first and second positive electrode active material layers can be excellent and uniform. Specifically, the first conductive material has a small area that can come into contact with the active material due to the short length of the first conductive material. However, the first conductive material has relatively excellent dispersibility, and thus it can be uniformly distributed within the active material layer, which makes it possible to exhibit uniform conductivity. On the other hand, the second conductive material has excellent conductivity because it can come into contact with a large number of active material particles within the active material layer due to the long length of the second conductive material. That is, in a case where the length of each of the first and second conductive materials is far from the above-described range, the aggregation between particles may occur, which may cause such a problem that the lack of uniformity of conductivity increases or the material characteristics deteriorate due to a decrease in length, thereby reducing the conductivity.

On the other hand, the specific surface area ($BET_1$) of the first conductive material may be 0.15 times to 0.5 times, preferably 0.15 times to 0.45 times, and more preferably 0.25 times to 0.4 times the specific surface area ($BET_2$) of the second conductive material. Specifically, the specific surface area ($BET_1$) of the first conductive material may be 200 $m^2$/g to 420 $m^2$/g, and the specific surface area ($BET_2$) of the second conductive material may be 850 $m^2$/g to 1,250 $m^2$/g. The specific surface area ($BET_2$) of the second conductive material is larger than the specific surface area ($BET_1$) of the first conductive material, and thus the conductivity of the second conductive material is more excellent than the conductivity of the first conductive material. In a case where the specific surface area of each of the first and second conductive materials satisfies the above-described range, the conductivity of the active material layer is uniform, and the contact area between the active material and the conductive material can be ensured, and thus it is possible to realize a secondary battery having excellent conductivity.

That is, the second conductive material has higher conductivity than the first conductive material, and the conductivity of each of the first and second positive electrode active material layers (212_1 and 212_2) can be controlled by controlling the contents of the first and second conductive materials having conductivities different from each other.

The content ($W_{T2}$) of the second conductive material in the first positive electrode active material layer (212_1) may be larger than the content ($W_{B2}$) of the second conductive material in the second positive electrode active material layer (212_2). Specifically, a weight ratio ($W_{T1}$:$W_{T2}$) of the first conductive material to the second conductive material contained in the first positive electrode active material layer (212_1) may be 15:1 to 45:1, preferably 16:1 to 32:1, and more preferably 16:1 to 30:1. In addition, a weight ratio ($W_{B1}$:$W_{B2}$) of the first conductive material to the second conductive material contained in the second positive electrode active material layer (212_2) may be 35:1 to 45:1, and preferably 38:1 to 42:1. In the electrode assembly (200) completed by winding the positive electrode (210), the negative electrode (220), and the separator (230), the first positive electrode active material layer (212_1) is located close to the battery case (300), unlike the second positive electrode active material layer (212_2) located close to the winding center. As a result, the first positive electrode active material layer (212_1) of the positive electrode (210) has a larger radius of curvature than the second positive electrode active material layer (212_2), which may cause a difference in the distance between the positive electrode active materials. The present invention makes it possible to prevent a difference in conductivity from occurring between the first positive electrode active material layer (212_1) and the second positive electrode active material layer (212_2) by controlling, within the above-described range, the contents of the first and second conductive materials having conductivities different from each other in the first positive electrode active material layer (212_1). In a case where the content ($W_{T2}$) of the second conductive material contained in the first positive electrode active material layer (212_1) is too small, it is impossible to prevent the conductivity of the first positive electrode active material layer (212_1) from decreasing as the radius of curvature increases. On the other hand, in a case where the content ($W_{T2}$) of the second conductive material contained in the first positive electrode active material layer (212_1) is excessive, the difference in conductivity with respect to the second positive electrode active material layer (212_2) may become large.

In addition, the content ($W_{T2}$) of the second conductive material in the first positive electrode active material layer (212_1) may be 0.015% by weight to 0.025% by weight with respect to the total weight of the first positive electrode active material layer (212_1). That is, in order to prevent the conductivity of the first positive electrode active material layer (212_1) from decreasing, the positive electrode (210) contains the second conductive material having a higher conductivity than the first conductive material, in the first positive electrode active material layer (212_1) as large as the amount in the above-described range. As a result, it is possible to prevent the phenomenon of uneven charging and discharging from occurring, and it is possible to realize the secondary battery (100) which has excellent cycle characteristics.

In addition, the first conductive material may be a multi-walled carbon nanotube (MWCNT), and the second conductive material may be a single-walled carbon nanotube (SWCNT) or a double-walled carbon nanotube (DWCNT). In this case, the number of walls of the multi-walled carbon nanotube may be 7 to 12. The single-walled carbon nanotube and the double-walled carbon nanotube have a larger average length and a larger specific surface area than the multi-walled carbon nanotube, and thus they have more excellent conductivity. As a result, it is possible to prevent a decrease in the conductivity of the first positive electrode active material layer (212_1) by increasing the content of the second conductive material contained in the first positive electrode active material layer (212_1).

The true density ($\eta_1$) of the first conductive material may be 1.97 g/cc to 2.07 g/cc, and the true density ($\eta_2$) of the second conductive material may be 1.85 g/cc to 1.95 g/cc. By including the true density of each of the first and second conductive materials in the above-described expression, the value of k can be obtained as a constant. Examples of the device for measuring the above-described true density include a dry type automatic density meter (Accupick II 1340 series, Shimadzu Corporation). In a case where the above-described device is used, a small amount of the first conductive material or second conductive material can be charged into the density meter to automatically measure the true density.

The above-described true density can also be obtained using another measuring method and/or device other than the above-described measuring method and/or device.

In addition, the porosity of the first positive electrode active material layer (212_1) may be smaller than the porosity of the second positive electrode active material layer (212_2). Specifically, in a case where the positive electrode (210) is wound, more compressive stress is applied to the second positive electrode active material layer (212_2) located to the side close to the winding center, and more tensile stress is applied to the first positive electrode active material layer (212_1) located the side close to the battery case, which causes a change in the porosity between the first and second positive electrode active material layers (212_1 and 212_2).

In this case, the porosity of the first positive electrode active material layer (212_1) is larger than the porosity of the second positive electrode active material layer (212_2). However, the porosity of the first positive electrode active material layer (212_1) may be 21% to 27%, and the porosity of the second positive electrode active material layer (212_2) may be 20% to 26%. Preferably, the porosity of the first positive electrode active material layer (212_1) may be 22% to 26%, and the porosity of the second positive electrode active material layer (212_2) may be 21% to 25%. In a case where the porosity of each of the first and second positive electrode active material layers (212_1 and 212_2) satisfies the above-described range, the difference in conductivity due to the difference in porosity can be reduced without adding an excessive amount of the second conductive material to the first positive electrode active material layer (212_1).

<Secondary battery>

The secondary battery (100) according to the present invention includes the electrode assembly (200) in which the positive electrode (210), the negative electrode (220), and the separator (230) disposed between the positive electrode (210) and the negative electrode (220) are wound in one direction; and the battery case (300)) in which the electrode assembly (200) is accommodated. There is no particular limitation on the external shape of the secondary battery (100), and the external shape thereof may be a cylindrical shape, a square shape, or the like which is obtained by using a can. For example, the secondary battery may be a cylindrical secondary battery, and the battery case may be a cylindrical can. The above-described battery case may be a container made of a metal material, and it may contain, for example, aluminum or an aluminum alloy.

In an exemplary embodiment, the secondary battery (100) according to the present invention may be a high-capacity cylindrical battery having a form factor ratio (defined as a value obtained by dividing the diameter of the cylindrical battery by the height thereof, that is, a ratio of the diameter ($\Phi$) to the height (H)) of 0.4 or more. Here, the form factor refers to a value indicating the diameter and height of the cylindrical battery.

In an exemplary embodiment, the secondary battery (100) according to the present invention may be, for example, a 46110 cell (diameter: 46 mm, height: 110 mm, form factor ratio: 0.418), a 4875 cell (diameter: 48 mm, height: 75 mm, form factor ratio: 0.640), a 48110 cell (diameter: 48 mm, height: 110 mm, form factor ratio: 0.436), a 4880 cell (diameter: 48 mm, height: 80 mm, form factor ratio: 0.600), or a 4680 cell (diameter: 46 mm, height: 80 mm, form factor ratio: 0.575). In the numerical value indicating the form factor, the first two numbers indicate the diameter of the cell, and the next two or three numbers indicate the height of the cell.

In addition, in a case where one cycle of charging and discharging is defined as charging until reaching 4.2 V at a constant current of 0.5 C in a temperature range of 20°C to 55°C and then discharging until reaching 2.5 V at a constant current of 0.5 C, the secondary battery (100) according to the present invention may have 80% or more of a capacity retention rate according to the following [Expression 2].

Capacity retention rate (%) = 100 * {discharge capacity after 200 cycles}/{discharge capacity after 1 cycle}. [Expression 2]

By reducing the difference in the physical properties of the first and second positive electrode active material layers, which may occur due to the winding of the positive electrode, uniform charging and discharging of the secondary battery is possible, which makes it possible to provide a secondary battery having improved cycle characteristics.

That is, the present invention makes it possible to realize a secondary battery having a large capacity and an excellent capacity retention rate by applying a positive electrode having controlled contents of the first and second conductive materials having conductivities different from each other, to a high-capacity secondary battery.

Electrode assembly

The electrode assembly (200) according to the present invention may have a structure that is obtained by winding the positive electrode (210), the negative electrode (220), and the separator (230) disposed between the positive electrode (210) and the negative electrode (220). In a case where the positive electrode (210), the negative electrode (220), and the separator (230) are wound, one surface of the positive electrode (210) is arranged toward the winding center, and the other surface of the positive electrode (210) is arranged toward the battery case (300).

(1) Positive electrode

The positive electrode (210) according to the present invention includes the positive electrode current collector (211), the first positive electrode active material layer (212_1) coated on the upper surface (211_1) of the positive electrode current collector, and the second positive electrode active material layer (212_2) coated on the lower surface (211_2) of the positive electrode current collector. The positive electrode current collector (211) is not particularly limited as long as it has conductivity and does not cause a chemical change in the battery, and it is possible to use, for example, stainless steel, aluminum, nickel, titanium, baked carbon, or those obtained by subjecting a surface of aluminum or stainless steel to a surface treatment with carbon, nickel, titanium, silver, or the like.

The above-described first and second positive electrode active material layers (212_1 and 212_2) further include a positive electrode active material and a positive electrode binder. The above-described positive electrode active material may be a commonly used positive electrode active material. Specifically, the positive electrode active material includes a layered compound such as lithium cobalt oxide ($LiCoO_2$) or a lithium nickel oxide ($LiNiO_2$), or a compound substituted with one or more transition metals; a lithium iron oxide such as $LiFe_3O_4$; a lithium manganese oxide having a chemical formula such as $Li_{1+a1}Mn_{2-a1}O_4$ ($0 \leq a1 \leq 0.33$), $LiMnO_3$, $LiMn_2O_3$, or $LiMnO_2$; a lithium copper oxide ($Li_2CuO_2$); a vanadium oxide such as $LiV_3O_8$, $V_2O_5$, or $Cu_2V_2O_7$; a Ni-site type lithium nickel oxide represented by a chemical formula $LiNi_{1-a2}Mc_2O_2$ (here, M is at least one selected from the group consisting of Co, Mn, Al, Cu, Fe, Mg, B, and Ga, and $0.01 \leq a2 \leq 0.3$ is satisfied); a lithium manganese composite oxide represented by a chemical formula $LiMn_{2-a3}Ma_3O_2$ (here, M is at least one selected from the group consisting of Co, Ni, Fe, Cr, Zn, and Ta, and $0.01 \leq a3 \leq 0.1$ is satisfied) or a chemical formula $Li_2Mn_3MO_8$ (here, M is at least one selected from the group consisting of Fe, Co, Ni, Cu, and Zn); $LiMn_2O_4$ in which a part of Li in the chemical formula is substituted with an alkali earth metal ion; and the like. However, the positive electrode active material is not limited thereto. The above-described positive electrode may be Li-metal.

Next, the positive electrode binder plays a role in improving the adhesion between the positive electrode active material particles and the adhesive force between the positive electrode active material and the positive electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, and one kind of these may be used alone, or a mixture of two or more kinds thereof may be used.

The positive electrode (210) can be manufactured according to a conventional method for manufacturing an electrode. For example, a positive electrode slurry is manufactured by mixing a positive electrode active material, a positive electrode binder, and/or a positive electrode conductive material in a solvent, and the positive electrode slurry is applied onto the positive electrode current collector, followed by drying and rolling, whereby it is possible to manufacture a positive electrode current collector having a positive electrode active material layer formed thereon.

On the other hand, solvents that are commonly used in the relevant technical field may be used as solvents for the positive electrode slurry, and for example, dimethyl sulfoxide (DMSO), isopropyl alcohol, N-methylpyrrolidone (NMP), acetone, water, and the like may be used alone, or two or more kinds thereof may be mixed and used.

(2) Negative electrode

The negative electrode (220) according to the present invention includes a negative electrode current collector and a negative electrode active material layer formed on both sides of the negative electrode current collector. The negative electrode current collector is not particularly limited as long as it has high conductivity without causing a chemical change in the battery, and for example, copper, stainless steel, aluminum, nickel, titanium, baked carbon, or those obtained by subjecting a surface of copper or stainless steel to a surface treatment with carbon, nickel, titanium, silver, or the like, an aluminum-cadmium alloy, and the like may be used.

As the negative electrode active material, compounds that enable the reversible intercalation and deintercalation of lithium, which are generally used in the relevant technical field, may be used, and the kinds thereof are not particularly limited. Specific examples of the negative active material include a carbonaceous material such as artificial graphite, natural graphite, a graphitized carbon fiber, or amorphous carbon; silicon-based substance such as Si, a Si-Me alloy (here, Me is at least one or more selected from the group consisting of Al, Sn, Mg, Cu, Fe, Pb, Zn, Mn, Cr, Ti, and Ni), SiOy (here, $0 < y < 2$), or a Si-C composite; a thin film of a lithium metal; and a metal material capable of alloying with lithium, such as Sn or Al. Any one of these may be used alone, or a mixture of two or more thereof may be used.

The above-described negative electrode conductive material is used to provide conductivity to the negative electrode, and it can be used without particular limitation as long as it does not cause a chemical change but has electronic conductivity in a battery to be constituted. The above-described negative electrode conductive material may be the same as the above-described positive electrode conductive material.

The negative electrode binder plays a role in improving the adhesion between the negative electrode active material particles and the adhesive force between the negative electrode active material and the negative electrode current collector. The above-described negative electrode binder may be the same as the above-described positive electrode binder.

On the other hand, the negative electrode (220) can be manufactured according to a conventional method for manufacturing an electrode. For example, a negative electrode slurry is manufactured by mixing a negative electrode active material, a negative electrode binder, and/or a negative electrode conductive material in a solvent, and the negative electrode slurry is applied onto the negative electrode current collector, followed by drying and rolling, whereby it is possible to manufacture a negative electrode current collector having a negative electrode active material layer formed thereon.

Solvents that are commonly used in the relevant technical field may be used as solvents for the negative electrode slurry, and for example, dimethyl sulfoxide (DMSO), isopropyl alcohol, N-methylpyrrolidone (NMP), acetone, water, and the like may be used alone, or two or more kinds thereof may be mixed and used.

(3) Separator

The separator (230) according to the present invention separates the positive electrode (210) and the negative electrode (220) and provides a passage for movement of lithium ions. Any separator that is commonly used in a secondary battery can be used without particular limitation. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structural body of two or more layers thereof may be used as the separator. In addition, a conventional porous nonwoven fabric, for example, a nonwoven fabric made of glass fibers having a high melting point, polyethylene terephthalate fibers, or the like may be used. In addition, a coated separator containing a ceramic component or a polymeric substance may be used to ensure heat resistance or mechanical strength.

**MODE FOR CARRYING OUT THE INVENTION**

Hereinafter, examples of the present invention will be described in detail so that a person having ordinary skill in the art can easily carry out the examples of the present invention. However, the present invention may be embodied in various forms different from each other and thus is not limited to the examples described herein.

Example 1

A positive active material, a first conductive material, a second conductive material, and a PVDF binder were mixed in N-methyl-2-pyrrolidone (NMP) at a weight ratio of 97.585:0.4:0.015:2 (positive active material : first conductive material : second conductive material : PVDF binder) to manufacture a first positive electrode active material slurry. In this case, $Li(Ni_{0.89}Co_{0.06}Mn_{0.04}Al_{0.01})O_2$ was used as the positive electrode active material, multi-walled carbon nanotubes (MWCNTs) having a specific surface area of 320 $m^2$/g, having an average length of 1.5 $\mu$m, and having a true density of 2.02 g/cc were used as the first conductive material, and single-walled carbon nanotubes (SWCNTs) having a specific surface area of 1050 $m^2$/g, having an average length of 6 $\mu$m, and having a true density of 1.9 g/cc were used as the second conductive material.

A second positive electrode active material slurry was manufactured in the same manner as in the manufacturing method for the first positive electrode active material slurry, except that the positive active material, the first conductive material, the second conductive material, and the PVDF binder were mixed at a weight ratio of 97.59:0.4:0.01:2 (positive active material : first conductive material : second conductive material : PVDF binder). A first positive electrode active material layer was manufactured by applying the first positive electrode active material slurry onto an upper surface of a positive electrode current collector (Al) at a loading amount of 0.454 g/25 $cm^2$, and a second positive electrode active material layer was manufactured by applying the second positive electrode active material slurry onto a lower surface of the positive electrode current collector at a loading amount of 0.430 g/25 $cm^2$. Thereafter, the first and second positive electrode active material layers and the positive electrode current collector were dried and subjected to roll press to manufacture a positive electrode.

A negative electrode active material, a conductive material, a binder, and CMC were mixed in water at a weight ratio of 96.2:0.35:2.2:1.1 (negative electrode active material : conductive material : binder : CMC) to manufacture a negative electrode slurry. In this case, natural graphite and artificial graphite, each of which was mixed at a weight ratio of 7:3, were used as the negative active material, $BM-L_2O3$ from Zeon Corporation was used as the binder, and Super C65 from Imerys S.A. was used as the conductive material. The above-described manufactured negative electrode slurry was applied onto a negative electrode current collector (Cu thin film), dried, and subjected to roll press to manufacture a negative electrode.

The separator was allowed to be disposed between the positive electrode and the negative electrode which had been manufactured as described above, and winding was carried out to manufacture a jelly-roll type electrode assembly, in which the second positive electrode active material layer of the positive electrode was located on the inner side to face the winding axis, and the first positive electrode active material layer was located on the outer side. After the electrode assembly manufactured as described above was accommodated in a cylindrical battery can, an electrolyte obtained by mixing ethylene carbonate (EC) and dimethyl carbonate (DMC) at a volume ratio of 25:75 (ethylene carbonate (EC) : dimethyl carbonate (DMC)) and then dissolving $LiPF_6$ to a concentration of 1.0 M was injected to manufacture a secondary battery, which is a 4680 cell.

Example 2

A secondary battery was manufactured in the same method as in Example 1, except that the positive active material, the first conductive material, the second conductive material, and the PVDF binder were mixed at a weight ratio of 97.58:0.4:0.02:2 (positive active material : first conductive material : second conductive material : PVDF binder) to manufactured the first positive electrode active material slurry.

Example 3

A secondary battery was manufactured in the same method as in Example 1, except that the positive active material, the first conductive material, the second conductive material, and the PVDF binder were mixed at a weight ratio of 97.575:0.4:0.025:2 (positive active material : first conductive material : second conductive material : PVDF binder) to manufactured the first positive electrode active material slurry.

Comparative Example 1

A secondary battery was manufactured in the same method as in Example 1, except that the positive active material, the first conductive material, the second conductive material, and the PVDF binder were mixed at a weight ratio of 97.59:0.4:0.01:2 (positive active material : first conductive material : second conductive material : PVDF binder) to manufactured the first positive electrode active material slurry.

Comparative Example 2

A secondary battery was manufactured in the same method as in Example 1, except that the positive active material, the first conductive material, the second conductive material, and the PVDF binder were mixed at a weight ratio of 97.57:0.4:0.03:2 (positive active material : first conductive material : second conductive material : PVDF binder) to manufactured the first positive electrode active material slurry.

The contents of the first and second conductive materials contained in each of the positive electrodes manufactured in Examples 1 and 2 and Comparative Examples 1 to 3 are summarized and shown in Table 1 below.

[Table 1]

| | First positive electrode active material layer | | Second positive electrode active material layer | |
|---|---|---|---|---|
| | First conductive material ($W_{T1}$) | Second conductive material ($W_{T2}$) | First conductive material ($W_{B1}$) | Second conductive material ($W_{B2}$) |
| Example 1 | 0.4% by weight | 0.015% by weight | 0.4% by weight | 0.01% by weight |
| Example 2 | 0.4% by weight | 0.02% by weight | 0.4% by weight | 0.01% by weight |
| Example 3 | 0.4% by weight | 0.025% by weight | 0.4% by weight | 0.01% by weight |
| Comparative Example 1 | 0.4% by weight | 0.01% by weight | 0.4% by weight | 0.01% by weight |
| Comparative Example 2 | 0.4% by weight | 0.03% by weight | 0.4% by weight | 0.01% by weight |

Experimental Example 1: Evaluation of porosity and calculation of K value according to [Expression 1]

The porosity of each of the wound first and second positive electrode active material layers of the secondary battery manufactured in each of Examples 1 to 3 and Comparative Examples 1 and 2 was evaluated and are shown in Table 2 below.

Specifically, the porosity was calculated according to the following [Expression 3].

Porosity of positive electrode active material layer after winding (%) = {1 - (electrode density of positive electrode active material layer after winding/true density of positive electrode active material layer)} $\times$ 100      [Expression 3]

The true density of the positive electrode active material layer is the density of the positive electrode active material layer, which is measured in a case where the positive electrode active material layer is collected to a certain size and then pressed with a press device until the thickness of the positive electrode active material layer does not change, and the electrode density of the positive electrode active material layer after winding is the density of the positive electrode active material layer, which is calculated by dividing the electrode weight (g) per unit area (cm$^2$) measured by collecting the positive electrode active material layer to a certain size after rolling, by the electrode thickness (cm).

In addition, each of the secondary batteries manufactured in Examples 1 to 3 and Comparative Examples 1 and 2 were subjected to measurement, and the K value was calculated according to the following [Expression 1] and is shown in Table 2 below.

[Expression 1]

$$K = \frac{(w_{T1} \times BET_1 \times L_1 \times \eta_1) + (w_{T2} \times BET_2 \times L_2 \times \eta_2)}{(w_{B1} \times BET_1 \times L_1 \times \eta_1) + (w_{B2} \times BET_2 \times L_2 \times \eta_2)} \times \frac{P_B}{P_T} \times 0.85$$

In the above-described Expression 1, $W_{T1}$ indicates a content (%) of the first conductive material contained in the first positive electrode active material layer, $W_{T2}$ indicates a content (%) of the second conductive material contained in the first positive electrode active material layer, $W_{B1}$ indicates a content (%) of the first conductive material contained in the second positive electrode active material layer, $W_{B2}$ indicates a content (%) of the second conductive material contained in the second positive electrode active material layer, $BET_1$ indicates a specific surface area (m$^2$/g) of the first conductive material, $BET_2$ indicates a specific surface area (m$^2$/g) of the second conductive material, $L_1$ indicates an average length ($\mu$m) of the first conductive material, $L_2$ indicates an average length ($\mu$m) of the second conductive material, $\eta_1$ indicates a true density (g/cc) of the first conductive material, $\eta_2$ indicates a true density (g/cc) of the second conductive material, $P_T$ indicates a porosity (%) of the first positive electrode active material layer, and $P_B$ indicates a porosity (%) of the second positive electrode active material layer.

[Table 2]

| | Porosity (%) | | K |
| --- | --- | --- | --- |
| | First positive electrode active material ($P_T$) | Second positive electrode active material layer ($P_B$) | |
| Example 1 | 24.480 | 23.400 | 0.908 |
| Example 2 | 24.276 | 23.205 | 1.004 |
| Example 3 | 24.582 | 23.498 | 1.100 |
| Comparative Example 1 | 24.174 | 23.108 | 0.813 |
| Comparative Example 2 | 24.378 | 23.303 | 1.196 |

Experimental Example 2: Evaluation of capacity retention rate

Secondary batteries including the positive electrodes respectively manufactured according to Examples 1 and 2 and Comparative Examples 1 to 3 were manufactured, and the respective capacity retention rates thereof were measured and are shown in Table 3 below.

Specifically, for each of the secondary batteries manufactured as described above, 200 cycles (n = 200) of charging and discharging were carried out, and then the capacity retention rate was measured using a cycler from PNE, where one cycle (n = 1) of charging and discharging was defined as charging until reaching 4.2 V at a constant current of 0.5 C in a temperature range of 20°C to 55°C and then discharging until reaching 2.5 V at a constant current of 0.5 C.

[Table 3]

|  | K | Capacity retention rate (%) |
|---|---|---|
| Example 1 | 0.908 | 83.2 |
| Example 2 | 1.004 | 85.1 |
| Example 3 | 1.100 | 81.5 |
| Comparative Example 1 | 0.813 | 79.5 |
| Comparative Example 2 | 1.196 | 74.7 |

With reference to Table 3 described above, it can be confirmed that the closer to 1 the K value is, the more excellent the capacity retention rate is. Specifically, Examples 1 to 3, where k is 0.9 to 1.1, have a higher capacity retention rate than Comparative Example 1, where the k value is 0.813, and Comparative Example 2, where the k value is 1.196. This is presumed to be because the content of the second conductive material in the first positive electrode active material layer is controlled in Examples 1 to 3, which makes the conductivity between the first positive electrode active material layer and the second positive electrode active material layer similar to each other.

While this invention has been particularly shown and described with reference to preferred embodiments thereof and drawings, it will be understood by those skilled in the art that various changes in form and details may be made therein without departing from the spirit and scope of the invention as defined by the appended claims.

Reference Signs List

100: secondary battery
200: electrode assembly
210: positive electrode
211: positive electrode current collector
211_1: upper surface of positive electrode current collector
211_2: lower surface of positive electrode current collector
212_1: first positive electrode active material layer
212_2: second positive electrode active material layer
220: negative electrode
230: separator
300: battery case

**Claims**

1. A positive electrode comprising:

a positive electrode current collector;
a first positive electrode active material layer formed on an upper surface of the positive electrode current collector; and
a second positive electrode active material layer formed on a lower surface of the positive electrode current collector,
wherein each of the first positive electrode active material layer and the second positive electrode active material layer includes a first conductive material and a second conductive material,
an average length of the second conductive material is longer than an average length of the first conductive material, and
K indicated by the following [Expression 1] is 0.82 to 1.16:

[Expression 1]

$$K = \frac{(w_{T1} \times BET_1 \times L_1 \times \eta_1) + (w_{T2} \times BET_2 \times L_2 \times \eta_2)}{(w_{B1} \times BET_1 \times L_1 \times \eta_1) + (w_{B2} \times BET_2 \times L_2 \times \eta_2)} \times \frac{P_B}{P_T} \times 0.85$$

in Expression 1, $W_{T1}$ indicates a content (% by weight) of the first conductive material contained in the first positive electrode active material layer, $W_{T2}$ indicates a content (% by weight) of the second conductive material contained in the first positive electrode active material layer, $W_{B1}$ indicates a content (% by weight) of the first conductive material contained in the second positive electrode active material layer, $W_{B2}$ indicates a content (% by weight) of the second conductive material contained in the second positive electrode active material layer, $BET_1$ indicates a specific surface area ($m^2/g$) of the first conductive material, $BET_2$ indicates a specific surface area ($m^2/g$) of the second conductive material, $L_1$ indicates an average length ($\mu m$) of the first conductive material, $L_2$ indicates an average length ($\mu m$) of the second conductive material, $\eta_1$ indicates a true density (g/cc) of the first conductive material, $\eta_2$ indicates a true density (g/cc) of the second conductive material, $P_T$ indicates a porosity (%) of the first positive electrode active material layer, and $P_B$ indicates a porosity (%) of the second positive electrode active material layer.

2. The positive electrode of claim 1, wherein the average length ($L_2$) of the second conductive material is 2 times to 6 times the average length ($L_1$) of the first conductive material.

3. The positive electrode of claim 2, wherein the average length ($L_2$) of the second conductive material is 4 $\mu m$ to 8 $\mu m$.

4. The positive electrode of claim 1, wherein the content ($W_{T2}$) of the second conductive material in the first positive electrode active material layer is larger than the content ($W_{B2}$) of the second conductive material in the second positive electrode active material layer.

5. The positive electrode of claim 1, wherein a weight ratio ($W_{T1}:W_{T2}$) of the first conductive material to the second conductive material contained in the first positive electrode active material layer is 15:1 to 45:1.

6. The positive electrode of claim 1, whereat a weight ratio of the first conductive material to the second conductive material contained in the second positive electrode active material layer ($W_{B1}:W_{B2}$) is 35:1 to 45:1.

7. The positive electrode of claim 1, wherein the content ($W_{T2}$) of the second conductive material in the first positive electrode active material layer is 0.015% by weight to 0.025% by weight with respect to a total weight of the first positive electrode active material layer.

8. The positive electrode of claim 1, wherein the specific surface area ($BET_1$) of the first conductive material is 0.15 times to 0.5 times the specific surface area ($BET_2$) of the second conductive material.

9. The positive electrode of claim 1,

   wherein the specific surface area ($BET_1$) of the first conductive material is 200 $m^2/g$ to 420 $m^2/g$, and
   the specific surface area ($BET_2$) of the second conductive material is 850 $m^2/g$ to 1,250 $m^2/g$.

10. The positive electrode of claim 1,

    wherein the first conductive material is a multi-walled carbon nanotube, and
    the second conductive material is a single-walled carbon nanotube or a double-walled carbon nanotube.

11. The positive electrode of claim 1,

    wherein the true density ($\eta_1$) of the first conductive material is 1.97 g/cc to 2.07 g/cc, and
    the density ($\eta_2$) of the second conductive material is 1.85 g/cc to 1.95 g/cc.

12. A secondary battery comprising:

    an electrode assembly in which the positive electrode of claim 1, a negative electrode, and a separator disposed between the positive electrode and the negative electrode are wound in one direction; and
a battery case in which the electrode assembly is accommodated,
wherein, when the positive electrode is wound, the first positive electrode active material layer is arranged to face the battery case, and the second positive electrode active material layer is arranged to face a winding center.

13. The secondary battery of claim 12, wherein the secondary battery is a cylindrical secondary battery having a form factor ratio of 0.4 or more.

14. The secondary battery of claim 12, wherein the secondary battery is a 46110 cell, a 4875 cell, a 48112 cell, a 4880 cell, or a 4680 cell.

15. The secondary battery of claim 12, wherein in a case where one cycle of charging and discharging is defined as charging until reaching 4.2 V at a constant current of 0.5 C in a temperature range of 20°C to 55°C and then discharging until reaching 2.5 V at a constant current of 0.5 C, the secondary battery has 80% or more of a capacity retention rate according to the following [Expression 2]:

Capacity retention rate (%) = 100 * {discharge capacity after 200 cycles}/{discharge capacity after 1 cycle}. 　　　　　[Expression 2]

[FIG. 1]

210

212_1          211_1

211

212_2          211_2

[FIG. 2]

100

212_2

212_1

211

300

210     230     220     230

200

## INTERNATIONAL SEARCH REPORT

International application No.

**PCT/KR2024/097145**

### A. CLASSIFICATION OF SUBJECT MATTER

**H01M 4/62**(2006.01)i; **H01M 4/13**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); C01B 32/158(2017.01); H01M 10/052(2010.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), 양극 활물질층(positive electrode active material layer), 도전재(conductive material), 탄소 나노 튜브(carbon nanotube), 용량 유지율(capacity retention rate)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0140539 A (LG ENERGY SOLUTION, LTD.) 06 October 2023 (2023-10-06)<br>    See paragraphs [0047]-[0075], [0107]-[0123], [0141]-[0167] and [0199]-[0216]. | 1-15 |
| A | JP 2015-153535 A (TOYOTA MOTOR CORP.) 24 August 2015 (2015-08-24)<br>    See entire document. | 1-15 |
| A | KR 10-2016-0040125 A (LG CHEM, LTD.) 12 April 2016 (2016-04-12)<br>    See entire document. | 1-15 |
| A | KR 10-2020-0121498 A (LG CHEM, LTD.) 26 October 2020 (2020-10-26)<br>    See entire document. | 1-15 |
| A | US 2023-0282835 A1 (NINGDE AMPEREX TECHNOLOGY LIMITED) 07 September 2023 (2023-09-07)<br>    See entire document. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 March 2025** | **24 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/097145**

| Patent document cited in search report | | | Publication date (day/month/year) | Patent family member(s) | | | Publication date (day/month/year) |
|---|---|---|---|---|---|---|---|
| KR | 10-2023-0140539 | A | 06 October 2023 | CN | 118843959 | A | 25 October 2024 |
| | | | | EP | 4496039 | A1 | 22 January 2025 |
| | | | | JP | 2025-505190 | A | 21 February 2025 |
| | | | | WO | 2023-182867 | A1 | 28 September 2023 |
| JP | 2015-153535 | A | 24 August 2015 | | None | | |
| KR | 10-2016-0040125 | A | 12 April 2016 | CN | 107112500 | A | 29 August 2017 |
| | | | | CN | 107112500 | B | 19 May 2020 |
| | | | | JP | 2017-530528 | A | 12 October 2017 |
| | | | | JP | 6523443 | B2 | 29 May 2019 |
| | | | | KR | 10-1735202 | B1 | 12 May 2017 |
| | | | | US | 10135070 | B2 | 20 November 2018 |
| | | | | US | 10680247 | B2 | 09 June 2020 |
| | | | | US | 2016-0329566 | A1 | 10 November 2016 |
| | | | | US | 2019-0074518 | A1 | 07 March 2019 |
| | | | | WO | 2016-053063 | A1 | 07 April 2016 |
| KR | 10-2020-0121498 | A | 26 October 2020 | KR | 10-2733688 | B1 | 22 November 2024 |
| US | 2023-0282835 | A1 | 07 September 2023 | CN | 114300686 | A | 08 April 2022 |
| | | | | CN | 114300686 | B | 09 August 2022 |
| | | | | EP | 4270549 | A1 | 01 November 2023 |
| | | | | JP | 2024-513623 | A | 27 March 2024 |
| | | | | JP | 7504291 | B2 | 21 June 2024 |
| | | | | KR | 10-2024-0147694 | A | 08 October 2024 |
| | | | | WO | 2023-169113 | A1 | 14 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230193706